# DEMANDE DE BREVET EUROPEEN

(11) **EP 0 839 729 A1**
(43) Date de publication de la demande: **06.05.1998**
(21) Numéro de dépôt: 97420204.6
(22) Date de dépôt: 05.11.1997
(51) Int. Cl.: B65D 5/72, A01K 39/012

(54) **Boîte de conditionnement et de distribution d'aliments pour animaux**

(30) Priorité: 05.11.1996 FR 9613704
(71) Demandeur: Oxadis, 38290 La Verpilliere (FR)
(72) Inventeur: Bois, Jacques, 42000 Saint Etienne (FR); Domenget, Hervé, 69280 Marcy L'Etoile (FR); Darnat, Alain, 26260 Bren (FR)
(74) Mandataire: Maureau, Philippe

(57) **Abrégé**

Boîte comportant un corps tubulaire (3), par exemple en carton, fermé à ses extrémités par deux fonds (4, 5), dont au moins celui inférieur formant la base (4) est sensiblement perpendiculaire à la partie tubulaire. En outre, cette boîte comporte, sur sa paroi latérale, au moins deux lignes de rainage (7) qui divergent à partir d'un même point en direction de la base (4), jusqu'à une ligne de prédécoupe (8) ménagée à faible distance de la base (4), sensiblement parallèlement à celle-ci.

## Description

La présente invention a pour objet une boîte de conditionnement et de distribution d'aliments pour animaux, et notamment d'aliments secs se présentant sous forme de graines ou de granulés.

Généralement, les boîtes de conditionnement d'aliments pour animaux servent exclusivement au conditionnement de ceux-ci mais ne peuvent être utilisées pour la distribution des aliments. C'est ainsi que la boîte est ouverte, et que son contenu est vidé dans un récipient dans lequel l'animal vient manger.

Il existe des conditionnements, notamment pour graines d'alimentation d'oiseaux, comprenant un élément de conditionnement en forme de bidon fermé par un opercule, l'extrémité comportant l'opercule étant recouverte par une pièce tubulaire présentant des ouvertures latérales. Il convient tout d'abord de retirer la pièce tubulaire, d'ôter l'opercule, et de replacer la pièce tubulaire sur le récipient avant retournement du récipient, les graines se trouvant ainsi dans la pièce recouvrant le bidon et les oiseaux pouvant manger les graines grâce aux ouvertures latérales ménagées dans cette pièce. La structure de ce dispositif est complexe, ce qui conduit à un prix de revient élevé. De plus, la manipulation pour la mise en place dans la cage par l'opérateur n'est pas facile.

Le but de l'invention est de fournir une boîte d'un faible prix de revient, réalisée en carton ou similaire, assurant les fonctions de conditionnement et de distribution d'aliments, qui soit pratique de mise en oeuvre pour les opérateurs, et qui servent de support de marques et autres éléments de communication et d'information.

A cet effet, la boîte qu'elle concerne, comportant un corps tubulaire, par exemple en carton, fermé à ses extrémités par deux fonds, dont au moins celui inférieur formant la base est sensiblement perpendiculaire à la partie tubulaire, est caractérisée en ce qu'elle comporte, sur sa paroi latérale, au moins deux lignes de rainage qui divergent à partir d'un même point en direction de la base, jusqu'à une ligne de prédécoupe ménagée à faible distance de la base, sensiblement parallèlement à celle-ci.

Le consommateur ayant acheté une telle boîte, il lui suffit, pour nourrir un animal, d'exercer une pression sur le volet délimité par deux lignes de rainage et une ligne de prédécoupe. La ligne prédécoupe cède et le volet bascule vers l'intérieur de la boîte, par pivotement le long des deux lignes de rainage. Le volet, qui occupait donc une position convexe suivant le profil de la paroi du corps tubulaire, occupe alors une position concave en faisant saillie vers l'intérieur de la boîte et en dégageant, au-dessus de la base de celle-ci, une zone dans laquelle les aliments sont accessibles par les animaux et peuvent être consommés par ceux-ci. Le volet joue également un rôle de régulation du débit des aliments vers la zone de consommation.

Suivant une caractéristique de l'invention, dans le cas d'un corps tubulaire de section polygonale, les deux lignes de rainage divergent à partir d'une arête longitudinale délimitant deux faces adjacentes du corps tubulaire. Toutefois, le corps tubulaire peut également être de section cylindrique ou oblongue, les deux lignes de rainage s'étendant alors à partir d'une même génératrice.

Les deux lignes de rainage peuvent être symétriques ou dissymétriques par rapport à la génératrice du corps tubulaire à partir de laquelle elles s'étendent.

Suivant une forme d'exécution de cette boîte, le corps tubulaire comporte une paroi centrale et longitudinale délimitant deux compartiments distincts, ainsi que deux séries de lignes de rainage et de prédécoupe destinées à former deux volets permettant chacun l'accès à l'un des deux compartiments.

Conformément à une autre caractéristique de l'invention, dans la mesure où cette boîte est destinée au conditionnement et à la distribution d'aliments pour oiseaux, elle comporte avantageusement un élément en forme de chapeau, destiné à coiffer le fond supérieur du corps tubulaire et comportant, d'une part, sensiblement en son centre, une ouverture perpendiculaire à l'axe du corps et, d'autre part, à proximité de la paroi latérale du corps tubulaire, un élément de fixation sur les barreaux d'une cage.

L'ouverture ménagée dans le chapeau permet de suspendre la boîte à une tige d'un présentoir linéaire d'un magasin, pour la mise en vente de la boîte. La barrette que comporte le chapeau sert à la fixation de la boîte à l'intérieur d'une cage pour oiseaux, par engagement de la barrette entre deux barreaux verticaux et appuie sur une traverse horizontale.

Suivant une autre possibilité, toujours dans le cas de l'application à une boîte destinée au conditionnement et à la distribution d'aliments pour oiseaux, celle-ci comporte un élément de fond emboîtant destiné à venir coiffer la base du corps tubulaire en étant fixé sur celui-ci, et comportant une pièce rétractable et extractible par coulissement perpendiculairement à l'axe du corps tubulaire entre une position escamotée sous l'élément et une position sortie dans laquelle une extrémité en forme d'arceau constitue un perchoir pour un oiseau, cette pièce étant verrouillable mécaniquement dans ses deux positions extrêmes : sortie et escamotée. Cette caractéristique est intéressante, dans la mesure où, pour manger, un oiseau doit se trouver dans une position stable.

Afin d'éviter la dégradation de la boîte au cours de l'utilisation de celle-ci en tant que distributeur d'aliments, l'élément emboîtant comporte un rebord s'étendant jusqu'à proximité de la ligne de prédécoupe délimitant le bord inférieur d'un volet.

De toute façon, l'invention sera bien comprise à l'aide de la description qui suit, en référence au dessin schématique annexé représentant, à titre d'exemples non limitatifs, plusieurs formes d'exécution de cette boîte :
Figures 1 et 2 sont deux vues en perspective d'une boîte simple respectivement en position de fermeture et en position de distribution d'aliments ;
Figure 3 est une vue en perspective éclatée d'une boîte destinée au conditionnement et à la distribution d'aliments pour animaux ;
Figure 4 est une vue en perspective de cette même boîte en condition d'utilisation dans une cage ;
Figures 5 et 6 sont deux vues en coupe partielle de la partie inférieure de la boîte de figures 3 et 4 respectivement avant utilisation et en cours d'utilisation ;
Figure 7 est une vue en perspective d'une autre boîte destinée au conditionnement et à la distribution d'aliments pour autres animaux, notamment pour des chats.

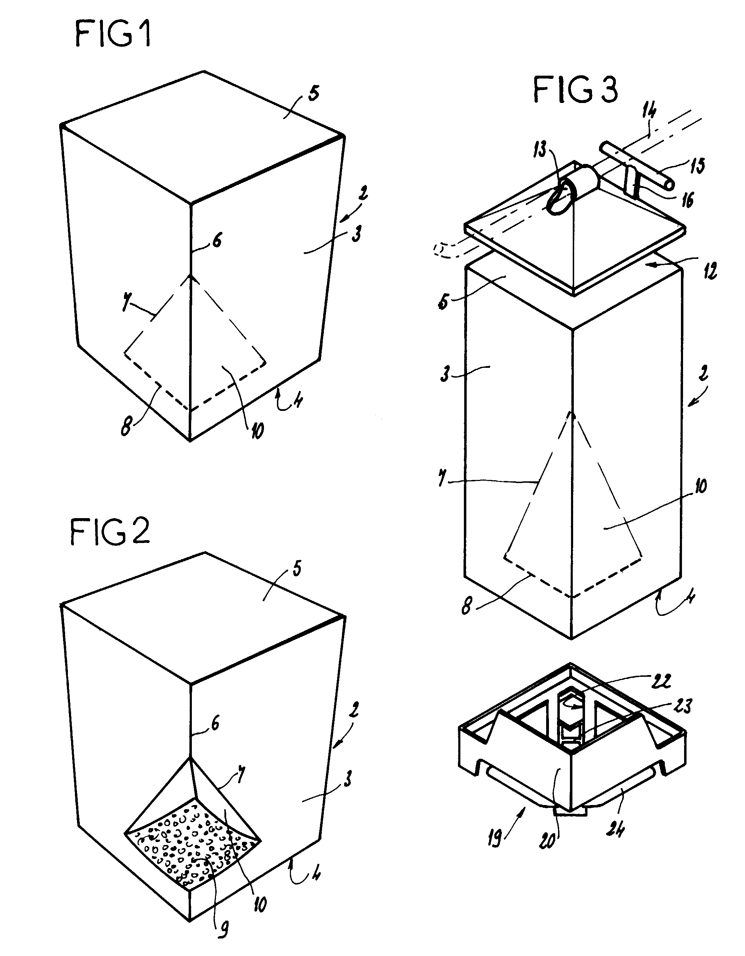

La figure 1 représente une boîte 2 de forme parallélépipédique de section carrée comportant un corps tubulaire 3 dont les extrémités sont obturées par un fond 4 et un fond 5, le fond 4 étant destiné à constituer la base de la boîte. Sur cette boîte, sont ménagées à partir d'une arête 6 du corps tubulaire, deux lignes de rainage 7 symétriques, qui divergent en direction de la base 4. Ces deux lignes de rainage 7 divergent jusqu'à une ligne de prédécoupe 8 disposée sensiblement parallèlement à la base 4 à proximité de celle-ci. La boîte contenant des aliments pour animaux constitués par exemple par des graines 9, se trouve, en période de vente, fermée, dans la position représentée à la figure 1. Après acquisition de la boîte et lorsque celle-ci est destinée à la distribution des graines à un animal, l'opérateur exerce une pression sur le volet 10 délimité par les lignes de rainage 7 et la ligne de prédécoupe 8. Le volet bascule vers l'intérieur, comme montré à la figure 2, dégageant une zone d'accès aux graines 9 qui, par gravité, descendent dans cette zone jusqu'à ce que la boîte soit vide.

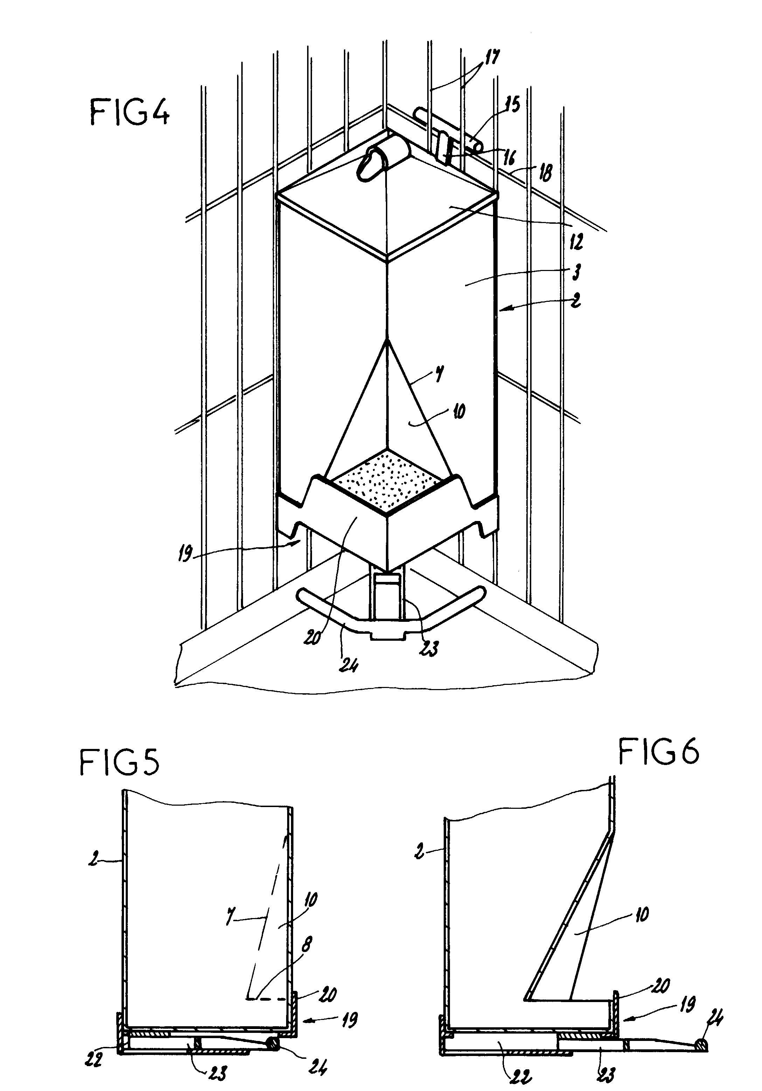

Les figures 3 à 6 représentent une autre forme d'exécution de cette boîte destinée plus spécialement au conditionnement de graines pour oiseaux. Les mêmes éléments sont désignés par les mêmes références que précédemment. La boîte 2 proprement dite est équipée d'un élément supérieur 12 en forme de chapeau, destiné à venir coiffer le fond supérieur 5. Le chapeau 12 présente, sensiblement en son centre, une ouverture horizontale 13 destinée à permettre le passage d'une tige 14 d'un présentoir linéaire, lors de la mise en vente de la boîte. Le chapeau 12 présente également, à proximité de la paroi latérale du corps tubulaire, une barrette horizontale 15 fixée en son centre par une zone de liaison 16 au corps du chapeau 12. Cette barrette est destinée, comme montré à la figure 4, à réaliser la fixation ferme de la boîte à l'intérieur d'une cage pour oiseaux. A cet effet, la barrette 15 est engagée derrière deux barreaux verticaux 17 de la cage et repose sur une traverse horizontale 18 de celle-ci.

La boîte représentée à la figure 3 comporte également un élément de fond 19 destiné à venir coiffer la base 4 du corps. Cet élément de fond comporte un rebord 20 s'étendant jusqu'à proximité de la ligne de prédécoupe 8 délimitant le bord inférieur du volet 10. En outre, dans l'élément de fond 19 est ménagée une partie 22 en forme de glissière, permettant le coulissement d'une pièce allongée 23 dont l'extrémité porte un arceau 24. Dans la position représentée aux figures 3 et 5, la pièce 23 est engagée dans la glissière 22, et en butée dans le fond de la glissière. Au contraire, dans la position représentée aux figures 4 et 6, la pièce 23 est coulissée en direction de l'extérieur, de telle sorte que l'arceau 24 dépasse à l'extérieur du corps tubulaire, formant ainsi un perchoir sur lequel l'oiseau peut se tenir lorsqu'il prend des aliments dans la boîte.

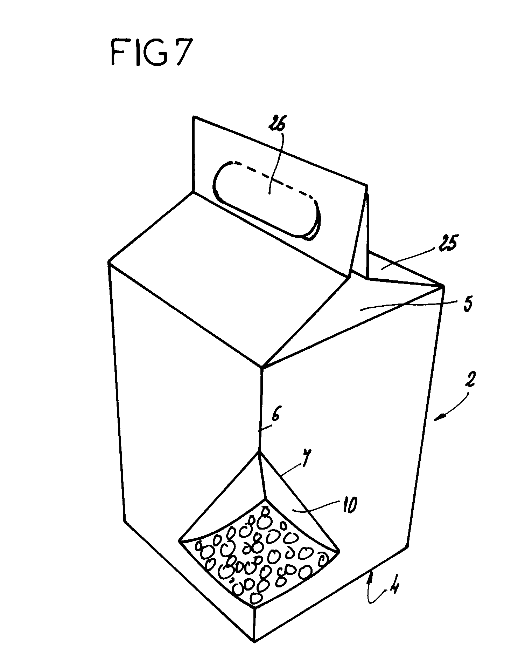

La figure 7 représente une autre boîte, dans laquelle les mêmes éléments sont désignés par les mêmes références que précédemment. Cette boîte, de plus grosse capacité que la précédente, destinée par exemple à contenir des aliments pour chats, comporte, à sa partie supérieure, un prolongement 25 servant au ménagement d'une poignée de portage 26.

Comme il ressort de ce qui précède, l'invention apporte une grande amélioration à la technique existante en fournissant une boîte de conditionnement et de distribution d'aliments pour animaux, de structure simple, ne nécessitant pas des pièces annexes pour réaliser la fonction distribution. Cette boîte peut être présentée sous une forme simple, ou être associée à des accessoires, tels qu'un chapeau et un élément de fond, comme décrit précédemment, étant précisé que ces derniers éléments peuvent être réalisés de façon simple en matière synthétique.

Comme il va de soi, l'invention ne se limite pas aux seules formes de réalisation de cette boîte décrites ci-dessus à titre d'exemples, elle en embrasse au contraire toutes les variantes. C'est ainsi notamment que cette boîte pourrait être de section cylindrique sans que l'on sorte pour autant du cadre de l'invention.

## Revendications

1. Boîte de conditionnement et de distribution d'aliments pour animaux, comportant un corps tubulaire (3) fermé à ses extrémités par deux fonds (4, 5), dont au moins celui inférieur formant la base (4) est sensiblement perpendiculaire à la partie tubulaire, caractérisée en ce qu'elle comporte, sur sa paroi latérale, au moins deux lignes de rainage (7) qui divergent à partir d'un même point en direction de la base (4), jusqu'à une ligne de prédécoupe (8) ménagée à faible distance de la base (4), sensiblement parallèlement à celle-ci.

2. Boîte selon la revendication 1, caractérisée en ce que, dans le cas d'un corps tubulaire (3) de section polygonale, les deux lignes de rainage (7) divergent à partir d'une arête longitudinale (6) délimitant deux faces adjacentes du corps tubulaire.

3. Boîte selon l'une quelconque des revendications 1 et 2, caractérisée en ce que les deux lignes de rainage (7) sont symétriques par rapport à une génératrice du corps tubulaire à partir de laquelle elles s'étendent.

4. Boîte selon l'une quelconque des revendications 1 et 2, caractérisée en ce que les deux lignes de rainage sont dissymétriques par rapport à une génératrice du corps tubulaire à partir de laquelle elles s'étendent.

5. Boîte selon l'une quelconque des revendications 1 à 4, caractérisée en ce que le corps tubulaire comporte une paroi centrale et longitudinale délimitant deux compartiments distincts, ainsi que deux séries de lignes de rainage et de prédécoupe destinées à former deux volets permettant chacun l'accès à l'un des deux compartiments.

6. Boîte selon l'une quelconque des revendications 1 à 5, destinée au conditionnement et à la distribution d'aliments pour oiseaux, caractérisée en ce qu'elle comporte un élément (12) en forme de chapeau, destiné à coiffer le fond supérieur du corps tubulaire (3) et comportant, d'une part, sensiblement en son centre, une ouverture (13) perpendiculaire à l'axe du corps et, d'autre part, à proximité de la paroi latérale du corps tubulaire, un élément (15) de fixation sur les barreaux d'une cage.

7. Boîte selon la revendication 6, caractérisée en ce qu'elle comporte un élément de fond emboîtant (19) destiné à venir coiffer la base (4) du corps tubulaire en étant fixé sur celui-ci, et comportant une pièce (23) rétractable et extractible par coulissement perpendiculairement à l'axe du corps tubulaire entre une position escamotée sous l'élément (19) et une position sortie dans laquelle une extrémité (24) en forme d'arceau constitue un perchoir pour un oiseau, cette pièce (23) étant verrouillable mécaniquement dans ses deux positions extrêmes : sortie et escamotée.

8. Boîte selon la revendication 7, caractérisée en ce que l'élément emboîtant (19) comporte un rebord (20) s'étendant jusqu'à proximité de la ligne de prédécoupe (8) délimitant le bord inférieur d'un volet (10).
